# EUROPEAN PATENT SPECIFICATION

(11) **EP 4 215 033 B1**
(45) Date of publication and mention of the grant of the patent: **10.09.2025**
(21) Application number: 23152163.4
(22) Date of filing: 18.01.2023
(51) Int. Cl.: A01C 23/02, A01C 23/00, A01C 5/06

(54) **A TRAILING SHOE FOR SLURRY APPLICATION AND A METHOD FOR REPLACING A WEAR ELEMENT OF A TRAILING SHOE**
SCHLEPPSCHUH FÜR EINEN GÜLLEVERTEILER UND VERFAHREN ZUM ERSETZEN EINES VERSCHLEISSELEMENTS EINES SCHLEPPSCHUHS
CHAUSSURE DE FUITE POUR APPLICATION DE BOUE ET PROCÉDÉ DE REMPLACEMENT D'UN ÉLÉMENT D'USURE D'UNE CHAUSSURE DE FUITE

(30) Priority: 24.01.2022 DK PA202270028
(43) Date of publication of application: 26.07.2023
(73) Proprietor: Samson Agro A/S, 8800 Viborg (DK)
(72) Inventor: RIIS, Thomas Schmidt, Hadsten (DK); HAUBJERG, Niels Hagemann, Ringkøbing (DK)
(74) Representative: Patrade A/S

(56) References cited:
- NL-A- 9 301 146
- US-A- 4 538 532
- US-A- 4 765 263
- US-A- 6 038 989

## Description

### Field of the Invention

The present invention relates to a trailing shoe for slurry application with an exchangeable wear element allowing the wear element to be replaced due to wear or need to change the shape of the wear element due to soil or crop condition.

The present invention relates a method for replacing a wear element of a trailing shoe in a fast and reliable manner.

### Background of the Invention

Trailing shoe systems for slurry application will typically comprise 40, 60, 80, 96 or another number of trailing shoes. The trailing shoe systems could comprise more than 100 trailing shoes.

The trailing shoes are dragged across a field during application of slurry to the field. Thus, the trailing shoes will over time wear down. The useability of the trailing shoes will typically reduce with wear and at a certain point the trailing shoes must be replaced.

However, the worn trailing shoes are rarely replaced, and often the trailing shoes are used past a wear threshold where the useability is severely reduced. This will increase the emission of greenhouse gases by the slurry application and consequently reduce the crop yield as well. Furthermore, when replaced, it is the entire trailing shoe causing a further increase in cost due to materials and the maintenance time needed to replace the worn trailing shoes.

Furthermore, the design of the trailing shoe causes the same trailing shoe shape to be used irrespectively of the local soil condition, which may cause unwanted or uncontrolled movement and efficiency of the trailing shoe. In the prior art,
NL9301146 A and US 6038989 A disclose trailing shoes.

### Object of the Invention

It is an object of the invention to provide a trailing shoe enabling fast and efficient replacement of a wear element, where only part of the trailing shoe is replaced such that material use is reduced even further.

It is an object of the invention to provide a method for replacing a wear element of a trailing shoe.

### Description of the Invention

An object of the invention is achieved by a trailing shoe according to claim 1.

Thereby, the wear element can easily be replaced by releasing the one, two or more retainers fixating the wear element to the main body. This enables replacement of the part of the trailing shoe which engages soil and thus is worn at a faster rate than the other parts.

Furthermore, the replacement act is faster compared to prior art where the entire trailing shoe must be replaced. Often the trailing shoe retainers hold all parts together which also means that all parts get loose when the shoe is changed, which makes the process complicated and time consuming.

In addition, different kinds of soil will require different shapes of the wear element to maximise the application of slurry, and due to this, the wear element may also be replaced.

The one, two or more retainers may be nuts or the like as this enables fixating or releasing using a wrench, e.g., a torque wrench.

Although the trailing shoe may use a plurality of retainers, it is preferred to use as few retainers as possible since this will decrease the time needed for fixating or replacing a wear element. This is important since trailing shoe systems may comprise 40, 60, 80, 96 or more trailing shoes, thus if a wear part can be replaced 30 seconds faster, then the time saved is approximately 48 minutes for the 96 trailing shoes. The number of trailing shoes may be any other number.

According to the invention, the main body comprises one, two or more common apertures adapted for insertion of the one, two or more retainers.

The common apertures enable a fast fixation and retaining of the wear element.

In some embodiments, the one, two or more retainers may be forced towards the wear element, and thereby creating a large friction force such that the wear element is wedged in the wear guide.

In some embodiments, the one, two or more common apertures may extend through the wear guide.

In an aspect of the invention, the main body may comprise an arm channel adapted for receiving an end of a support arm.

This will further decrease the installation time needed for installing the trailing shoe as the support arm is simply inserted into the arm channel.

In some embodiments, there may be retainers adapted for retaining the support arm in the arm channel.

According to the invention, the main body comprises a first body part and a second body part adapted to be clamped together to form the wear guide, wherein the first and second body parts further form the one, two or more common apertures.

A wear guide width of the wear guide is thus controlled by how much the first body part and the second body part are clamped together. The clamping is controlled by retainers in the one, two or more common apertures. In an initial step, the wear guide width is large, allowing for easy insertion of the wear element into the wear guide, after which the width is decreased until the wear element is clamped between the body parts and thus is fixated to the trailing shoe. The wear element can afterwards be replaced by releasing the retainers in the wear element, thereby increasing the wear guide width. In an aspect of the invention, the first and second body parts may form the arm channel, and the first and/or second body parts comprises one or more protrusions adapted to form local narrowing along the arm channel.

The protrusions causing local narrowing along the arm channel enable a support arm to be gripped without a need for additional retainers specifically adapted for retaining the support arm. Tests have shown that the clamping between the first and second body parts is sufficient for fixating both the wear element and the support arm.

The support arm may comprise an end complementary to the arm channel, and thereby play or wobble of the support arm in the arm channel is reduced significantly.

In an aspect of the invention, the first and second body parts may form a slide adapted to be gripped by a slurry outlet pipe.

The slurry outlet pipe will, by gripping the slide, further stabilise the trailing shoe.

The slurry outlet pipe may be made of a rubber material such the part of the slurry outlet pipe complementary to the slide may is slightly deformed when attached to the slide, thereby forming a biasing force due to deformation. A further effect of the biasing force is that it allows for larger tolerance of the assembly of trailing shoe and the support arm. This will increase useability and will make the trailing shoe less resistant to wear.

In an aspect of the invention, the wear element may further comprise a closed recess to form part one of the common apertures. According to the invention, the wear element comprises an open-ended recess for enabling the wear part to slide onto a retainer inserted into one of the common apertures.

The open-ended recess enables that the wear element is connected to the trailing shoe after the first body part and the second body part are clamped together by inserting a retainer into a common aperture of the body parts by slidding the open-ended recess onto the retainer. Afterwards the body parts are clamped further together such that the wear element is fixated. The wear element can be removed or replaced without completely releasing the body parts due to the open-ended recess, this will decrease time needed for replacing the wear part.

The closed recess will have to form part of the common aperture before a retainer is inserted into the common aperture, this is more cumbersome compared to the open-ended recess, however thereby it is prevented that the wear element becomes loose and fall of the trailing shoe. This decreases that metal pieces are dropped on a field such as a grass field, thereby the risk of a metal piece ends up in cow feed is prevented or at least reduced.

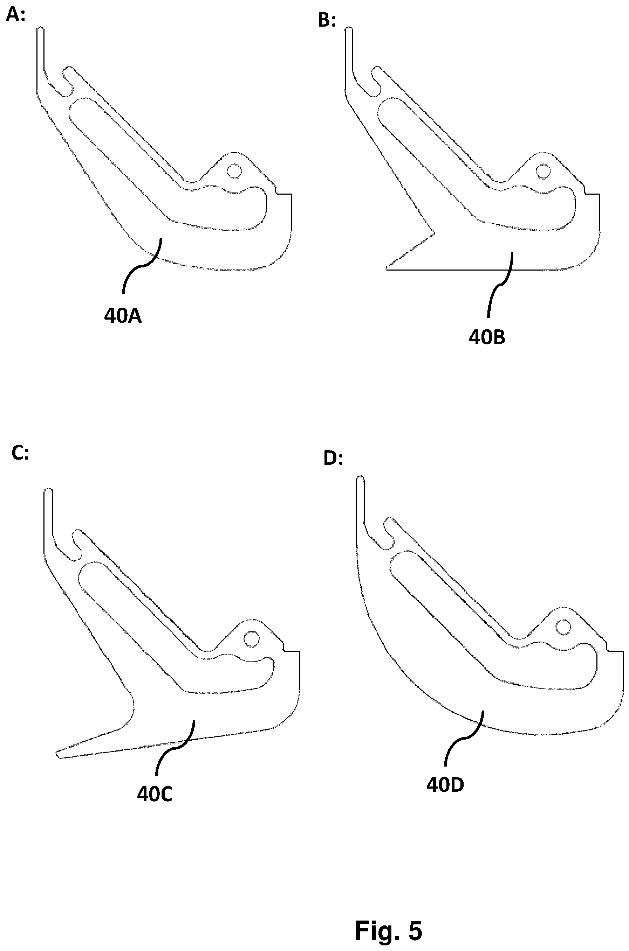

Figure 5A-D discloses four different embodiments of the wear element. All these wear elements comprise a closed recess and an open-ended recess as this enables a secure fixation of the wear element while enabling fast replacement since only the retainer in the closed recess must be removed while the retainer in the open-ended recess should just be loosened.

In theory, the same could be achieved by the wear element having two open-ended recesses, however in this case, the two open-ended recesses are preferably designed such that at least one of the retainers would still need to be removed in order to replace the wear element, because otherwise the risk of wear element becomes loose is high.

The retainer may be a nut and bolt, where the bolt extends through the common aperture from one of the body parts through the other body part on which side a nut is attached. During use the bolt will also extend through a closed recess or an open-ended recess.

In most embodiments, the recess closest to the soil during use will be a closed recess as the recess may otherwise engage the soil in an unwanted way and/or soil will enter the recess causing wear of the retainer.

In an embodiment, the wear element is made of a harder material than the main body. Thereby, the lifetime of the wear element is increased while the main body is made of alternative materials which typically are less costly.

In an aspect of the invention, the wear element may comprise a shield element extending towards the support arm during use. The shield will prevent soil to enter or be attached to a transition between the support arm, the wear element and/or the main body.

In an embodiment, the wear element may comprise an open-ended recess near the support arm, and the shield will shield the open-ended recess from soil, dirt or the like, thereby increasing the lifetime of the trailing shoe.

In an embodiment, the wear element may comprise a central hollow without material, this will decrease the overall material use and reduce the weight.

A further object of the disclosure is a trailing shoe kit for slurry application. The trailing shoe kit comprises
- a main body adapted to be connected with a slurry outlet pipe and a support arm, wherein the main body defines a wear guide;
- two or more wear elements adapted for engaging soil, wherein part of each of the two or more wear elements is adapted to positioned in the wear guide; and
- one, two or more retainers adapted for releasably fixating the wear elements to the main body, wherein the two or more wear elements have a different shape.

The two or more wear elements of different shape enable the trailing shoe to be used for slurry application on fields with different characteristics such as different soil.

The wear guide will only hold a single wear element at a time.

The trailing shoe may be according to any one of the previously mentioned embodiments.

An object of the invention is achieved by a trailing shoe system for slurry application, wherein the trailing shoe system comprises
- at least one trailing shoe according to any previously described embodiment;
- a support arm connected to the at least one trailing shoe; and
- a slurry outlet pipe connected to the at least one trailing shoe.

The trailing shoe system may comprise 40, 60, 80, 96 or more trailing shoes or any other number of trailing shoe, wherein at least one of the trailing shoes is according to any previously described embodiment.

The slurry outlet pipe may comprise rubber material and the slurry outlet pipe may be adapted for engaging a slide of the trailing shoe as previously described, wherein the slurry outlet pipe will grip the slide due to the material properties of rubber which will cause the trailing shoe to become more stable while allowing a greater tolerance of the components.

The support arm may comprise a support arm end complementary to an arm channel in the main body. The arm channel may comprise narrowings along the arm channel enabling connection to the support arm without use of any additional retainers.

An object of the invention is achieved by a method for replacing a wear element of a trailing shoe, the method comprises steps of
- providing a trailing shoe system and a second wear element;
- releasing the one, two or more retainers;
- replacing the wear element with the second wear element;
- fastening the one, two or more retainers.

The step of releasing the one, two or more retainers may include removing a retainer from a common aperture while only loosening one or more of the other retainers.

Thereby only a single retainer needs to be removed from the trailing shoe for replacement of the wear element. Thereby, the method becomes more efficient compared to the prior art solutions where the trailing shoe must be replaced.

### Description of the Drawing

Fig. 1 illustrates a trailing shoe system;
Fig. 2 illustrates an exploded view of the trailing shoe system;
Fig. 3 illustrates steps for assembling of the trailing shoe system;
Fig. 4 illustrates a step of connecting a slurry outlet pipe to the trailing shoe;
Fig. 5 illustrates different embodiments of a wear element; and
Fig. 6 discloses a method for replacing a wear element of a trailing shoe.

| **Item** | **Reference** |
|---|---|
| Trailing shoe system | 1 |
| Trailing shoe | 10 |
| Main body | 20 |
| Wear guide | 22 |
| Common apertures | 24, 24I, 24II |
| Arm channel | 26 |
| First body part | 30I |
| Second body part | 30II |
| Protrusion | 32 |
| Slide | 34 |
| Wear element | 40 |
| Closed recess | 42 |
| Open-ended recess | 44 |
| Shield | 46 |
| Retainers | 60, 60I, 60II |
| Slurry outlet pipe | 80 |
| Support arm | 90 |
| Method | 100 |
| Providing | 200 |
| Releasing | 300 |
| Replacing | 400 |
| Fastening | 500 |

### Detailed Description of the Invention

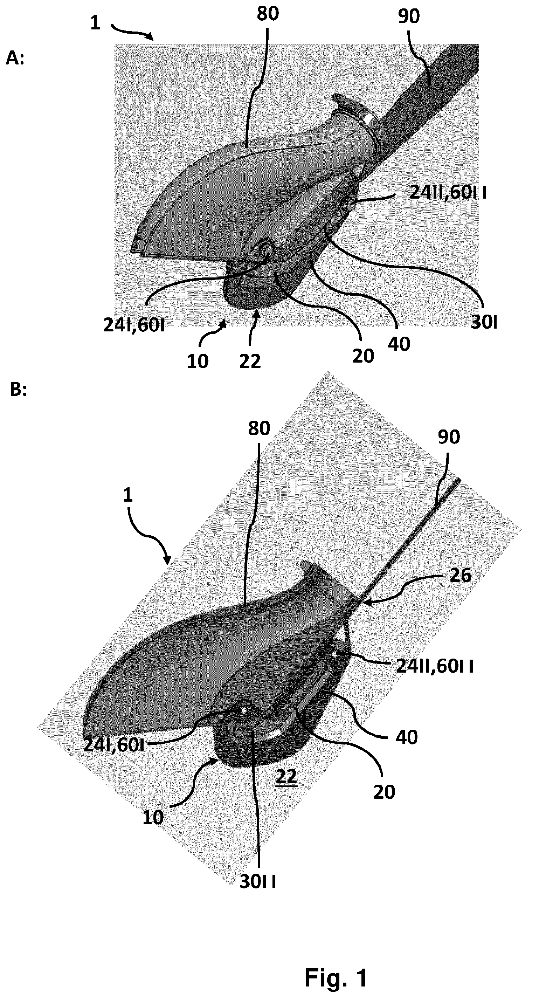

Fig. 1 discloses a trailing shoe system 1. Figure 1A discloses a perspective view and figure 1B discloses a cross-section view in a plane substantially parallel with a wear guide 22.

The trailing shoe system 1 comprises a trailing shoe 10 connected to a slurry outlet pipe 80 and a support arm 90. During normal use a boom will be equipped with 40, 60, 80, 96 or more trailing shoes similar to the one shown in figure 1.

The main body 20 comprises a first body part 30I and a second body part 30II, which are adapted to be clamped together to form a wear guide 22 and to form two common apertures 24I, 24II.

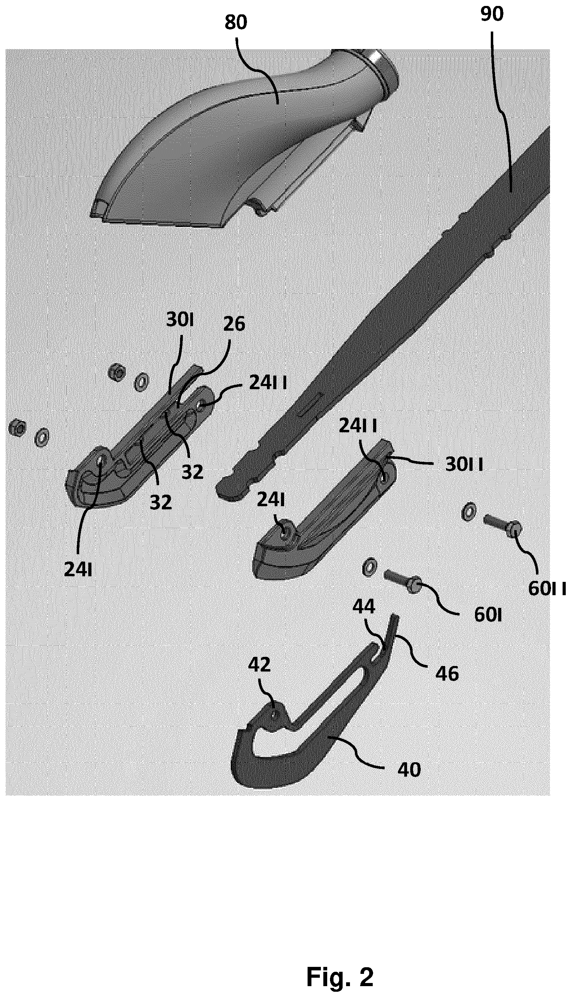

The first body part 30I and the second body part 30II further form the arm channel, and the first and second body parts 30I, 30II comprises one or more protrusions 32 adapted to form local narrowing along the arm channel 26 to better grip a complementary support arm 90. This is shown in greater detail on figure 2A.

Furthermore, the first and second body parts 30I, 30II form a slide 34 adapted to be gripped by a slurry outlet pipe 80. The slurry outlet pipe 80 has a part complementary to the slide 34 which is made of rubber as this enables another biasing force which can act on the top of the main body 20. Furthermore, the slurry outlet pipe 80 prevents or at least limits soil from entering into the trailing shoe 10.

The trailing shoe 10 further comprises a wear element 40 adapted for engaging soil, wherein part of the wear element 40 is positioned in the wear guide 22.

The wear element 40 comprises a closed recess 42 to form part one of the common apertures 24I, wherein a retainer 60I in the form of a nut and bolt, where the bolt is extending through the common aperture 24I and is secured by the nut. The clamping force can be controlled by rotating the nut and bolt.

The wear element 40 comprises an open-ended recess 44 which allows the wear element 40 to slide onto a retainer 60II inserted into one of the common apertures 24II. This open-ended recess 44 enable that the wear element 40 can be replaced by only removing a single retainer 60 from a common aperture 24 while it is only necessary to loosen the other retainer 60. This will save a significant amount of time as the procedure may need to be repeated 40, 60, 80, 96 or times or any other number depending on the specific system as the invention is not limited to a specific number.

The wear element 40 further comprises at the open-ended recess 44 a shield 46 extending towards and into a slit in the support arm 90. The shield 46 is adapted to prevent soil or the like from entering the open-ended recess 44, which would otherwise increase the wear on the retainer 60II.

Furthermore, if it was necessary to remove both retainers 60I, 60II then the first and second body parts 30I, 30II could separate, which would increase maintenance time and thus costs.

The two retainers 60I, 60II can be loosened or tightened, which will increase or decrease clamping force acted on the wear element 40. The skilled person would be able to find the sufficient force needed to fixate the wear element 40.

The embodiment shown in figure 1 is disclosed in greater detail in figures 2-4.

Fig. 2 discloses an exploded view of the trailing shoe system 1 as described in figure 1.

The exploded view reveals the first body part 30I having two protrusions 32 in a part, which will form the arm channel 26 together with the second body part 30II. The second body part 30II also have two protrusions 32 in a part, which will form the arm channel 26 together with the first body part 30I. The support arm 90 has indentations to accommodate the two narrowings formed along the arm channel 26.

The exploded view further reveals that the wear element 40 comprises a central hollow without material. The purpose of the central hollow is to save material, however the central hollow does not make the wear element 40 more or less replaceable.

The central hollow, and thus the material savings, is however possible due to the first and second body parts 30I, 30II clamping and supporting the wear element 40.

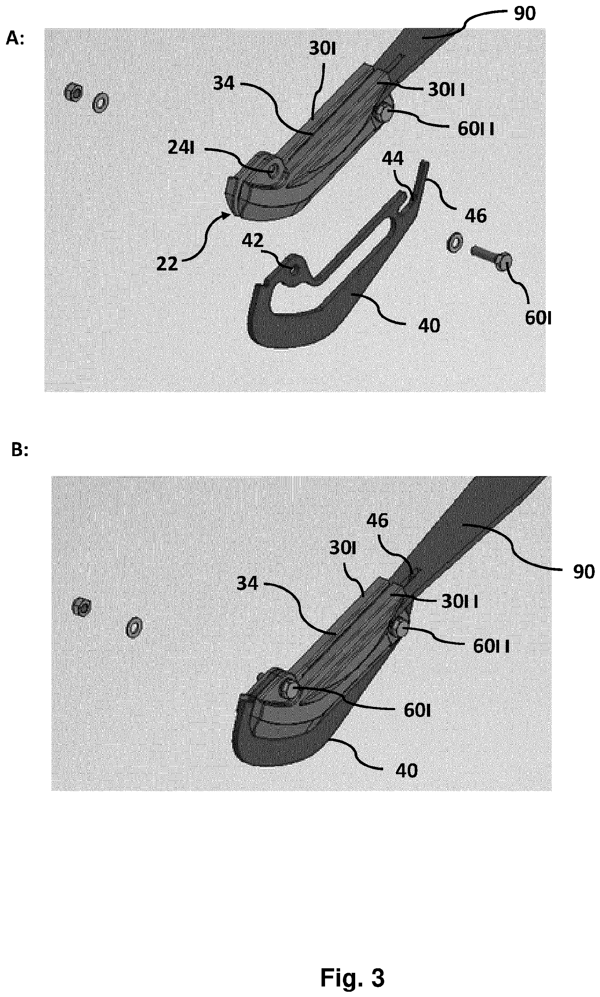

Fig. 3 discloses steps for assembling of the trailing shoe system 1 in figure 3A and figure 3B.

In figure 3A, the first body part 30I and the second body part 30II is clamped together around the support arm 90 and the retainer 60II is inserted into the common aperture 24II. In figure 3A, the first body part 30I and the second body part 30II are not clamped together tightly as this allows the wear element 40 into the wear guide 22, such that the open-ended recess 44 is slide onto the retainer 60II.

In figure 3B, the closed recess 42 has been aligned with the common aperture 24I, and the retainer 60I has been inserted and a bolt is to be connected on the other side. Afterwards both the retainers 60I, 60II are fastened causing further clamping of the wear element 40.

The steps disclosed in figure 3A and 3B can also be reversed when the wear element 40 is to be replaced.

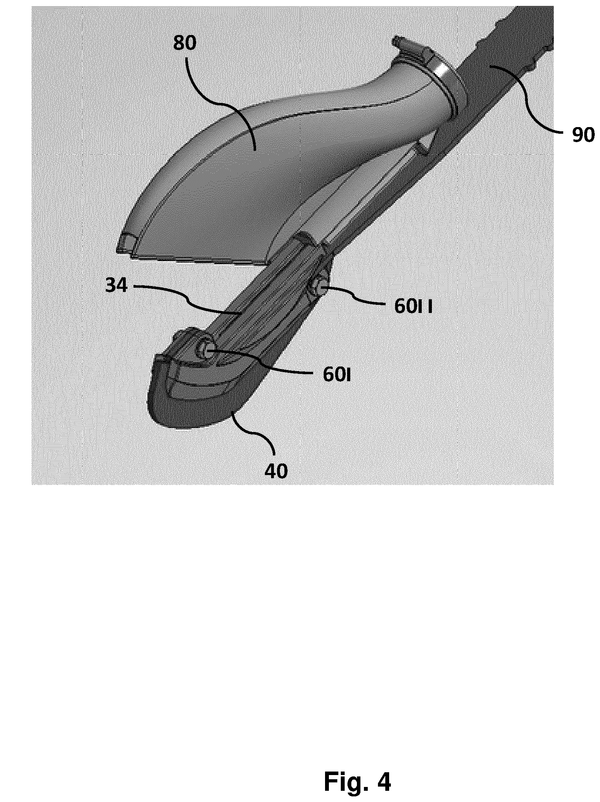

Fig. 4 discloses a step of connecting a slurry outlet pipe 80 to the trailing shoe 1. The first and the second body parts 30I, 30II form a slide 34 onto which a part of the slurry outlet pipe 80 is connected by a downwardly sliding motion.

The slurry outlet pipe 80 or at least part of the slurry outlet pipe 80 engaging the slide 34 is made of rubber or a similar material, which is capable of creating a biasing force to grip the slide 34.

Fig. 5 discloses different embodiments of a wear element 40. Figure 5A disclose the wear element 40A otherwise shown in figures 1-4. The wear element 40 in figures 1-4 could be replaced by one of the wear elements 40B to 40D or a different shaped wear element 40.

Figure 5B disclose wear element 40B, which is designed to have a soil seeking function, which will cause the wear element to enter deeper into the earth.

Figure 5C disclose wear element 40C, which is designed to have a greater soil seeking function than the embodiment in Figure 5B, this makes the wear element 40B suitable for hard ground soil.

Figure 5D disclose wear element 40D, which is designed to provide a larger wear area. This can be an advantage in rugged terrain where the angle of the towing shoe will vary greatly.

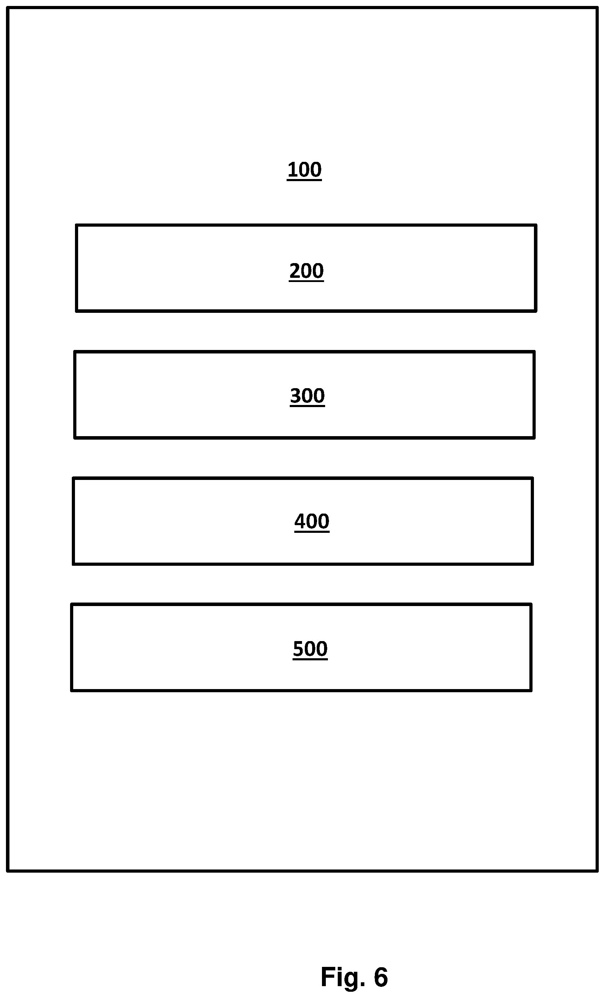

Fig. 6 discloses a method 100 for replacing a wear element 40 of a trailing shoe 1. The method 100 comprises steps of
- providing 200 a trailing shoe system 1 or a trailing shoe, and a second wear element 40;
- releasing 300 the one, two or more retainers 60;
- replacing 400 the wear element 40 with the second wear element 40;
- fastening 500 the one, two or more retainers 60.

## Claims

1. A trailing shoe (10) for slurry application, the trailing shoe (10) comprises
- a main body (20) adapted to be connected with a slurry outlet pipe (80) and a support arm (90), the main body (20) comprises a first body part (30I) and a second body part (30II), which are adapted to be clamped together to form a wear guide (22), wherein the first body part (30I) and the second body part (30II) form one, two or more common apertures (24);
- a wear element (40) adapted for engaging soil, wherein part of the wear element (40) is positioned in the wear guide (22); and
- one, two or more retainers (60I, 60II) adapted for insertion into the one or more apertures (24) and releasably fixating the wear element (40) to the wear guide (22),
**characterised in that**
the wear element (40) comprises an open-ended recess (44) for enabling the wear element (40) to slide onto a retainer (60) inserted into one of the common apertures (24).

2. A trailing shoe (10) according to claim 1, wherein the main body (20) comprises an arm channel (26) adapted for receiving an end of a support arm (90).

3. A trailing shoe (10) according to claim 1 or 2, wherein the first and second body parts (30I, 30II) form the arm channel (26), and the first and/or second body parts (30I, 30II) comprises one or more protrusions (32) adapted to form local narrowing along the arm channel (26).

4. A trailing shoe (10) according to claim 2 or 3, wherein the first and second body parts (30I, 30II) form a slide (34) adapted to be gripped by a slurry outlet pipe (80).

5. A trailing shoe (10) according to any one of claims 1-4, wherein the wear element (40) further comprises a closed recess (42) to form part of one of the common apertures (24)

6. A trailing shoe system (1) for slurry application, wherein the trailing shoe system (1) comprises
- at least one trailing shoe (10) according to any one of the previous claims 1-5;
- a support arm (90) connected to the at least one trailing shoe (10); and
- a slurry outlet pipe (80) connected to the at least one trailing shoe (10).

7. Method (100) for replacing a wear element (40) of a trailing shoe (10), the method (100) comprises steps of
- providing (200) a trailing shoe system (1) according to claim 6 or a trailing shoe according to any one of claims 1-5, and a second wear element (40);
- releasing (300) the one, two or more retainers (60);
- replacing (400) the wear element (40) with the second wear element (40);
- fastening (500) the one, two or more retainers (60).

## Patentansprüche

1. Schleppschuh (10) zur Gülleverteilung, wobei der Schleppschuh (10) umfasst
- einen Hauptkörper (20), der dazu angepasst ist, mit einem Gülleauslassrohr (80) und einem Stützarm (90) verbunden zu werden, wobei der Hauptkörper (20) einen ersten Körperteil (30I) und einen zweiten Körperteil (30II) umfasst, die dazu angepasst sind, zusammengeklemmt zu werden, um eine Verschleißführung (22) zu bilden, wobei der erste Körperteil (30I) und der zweite Körperteil (30II) eine, zwei oder mehrere gemeinsame Öffnungen (24) bilden;
- ein Verschleißelement (40), das zum Eingriff in den Boden angepasst ist, wobei ein Teil des Verschleißelements (40) in der Verschleißführung (22) positioniert ist; und
- einen, zwei oder mehrere Halter (60I, 60II), die zum Einsetzen in die eine oder die mehreren Öffnungen (24) und zum lösbaren Fixieren des Verschleißelements (40) an der Verschleißführung (22) angepasst sind,
**dadurch gekennzeichnet, dass**
das Verschleißelement (40) eine offenendende Aussparung (44) umfasst, die es dem Verschleißelement (40) ermöglicht, auf einen in eine der gemeinsamen Öffnungen (24) eingesetzten Halter (60) zu gleiten.

2. Schleppschuh (10) nach Anspruch 1, wobei der Hauptkörper (20) einen Armkanal (26) umfasst, der zum Aufnehmen eines Endes eines Stützarms (90) angepasst ist.

3. Schleppschuh (10) nach Anspruch 1 oder 2, wobei der erste und zweite Körperteil (30I, 30II) den Armkanal (26) bilden, und der erste und/oder zweite Körperteil (30I, 30II) einen oder mehrere Vorsprünge (32) umfasst, die dazu angepasst sind, lokale Verengungen entlang des Armkanals (26) zu bilden.

4. Schleppschuh (10) nach Anspruch 2 oder 3, wobei der erste und zweite Körperteil (30I, 30II) eine Gleitführung (34) bilden, die dazu angepasst ist, von einem Gülleauslassrohr (80) gegriffen zu werden.

5. Schleppschuh (10) nach einem der Ansprüche 1-4, wobei das Verschleißelement (40) ferner eine geschlossene Aussparung (42) umfasst, um einen Teil einer der gemeinsamen Öffnungen (24) zu bilden.

6. Schleppschuhsystem (1) zur Gülleverteilung, wobei das Schleppschuhsystem (1) umfasst
- wenigstens einen Schleppschuh (10) nach einem der vorhergehenden Ansprüche 1-5;
- einen Stützarm (90), der mit dem wenigstens einen Schleppschuh (10) verbunden ist; und
- ein Gülleauslassrohr (80), das mit dem wenigstens einen Schleppschuh (10) verbunden ist.

7. Verfahren (100) zum Ersetzen eines Verschleißelements (40) eines Schleppschuhs (10), wobei das Verfahren (100) die Schritte umfasst
- Bereitstellen (200) eines Schleppschuhsystems (1) nach Anspruch 6 oder eines Schleppschuhs nach einem der Ansprüche 1-5, und eines zweiten Verschleißelements (40);
- Lösen (300) des einen, der zwei oder der mehreren Halter (60);
- Ersetzen (400) des Verschleißelements (40) durch das zweite Verschleißelement (40);
- Befestigen (500) des einen, der zwei oder der mehreren Halter (60) .

## Revendications

1. Chaussure de fuite (10) pour une application de boue, la chaussure de fuite (10) comprend
- un corps principal (20) adapté pour être relié à un tuyau de sortie de boue (80) et à un bras de support (90), le corps principal (20) comprend une première partie de corps (30I) et une seconde partie de corps (30II), qui sont adaptées pour être serrées ensemble pour former un guide d'usure (22), dans laquelle la première partie de corps (30I) et la seconde partie de corps (30II) forment une, deux ou plusieurs ouvertures communes (24) ;
- un élément d'usure (40) adapté pour entrer en prise avec le sol, dans laquelle une partie de l'élément d'usure (40) est positionnée dans le guide d'usure (22) ; et
- un, deux ou plusieurs dispositifs de retenue (60I, 60II) adaptés pour être insérés dans une ou plusieurs ouvertures (24) et fixant de manière amovible l'élément d'usure (40) au guide d'usure (22),
**caractérisé en ce que**
l'élément d'usure (40) comprend un évidement ouvert (44) pour permettre à l'élément d'usure (40) de glisser sur un dispositif de retenue (60) inséré dans l'une des ouvertures communes (24).

2. Chaussure de fuite (10) selon la revendication 1, dans laquelle le corps principal (20) comprend un canal de bras (26) adapté pour recevoir une extrémité d'un bras de support (90).

3. Chaussure de fuite (10) selon la revendication 1 ou 2, dans laquelle les première et seconde parties de corps (30I, 30II) forment le canal de bras (26), et les première et/ou seconde parties de corps (30I, 30II) comprennent une ou plusieurs saillies (32) adaptées pour former un rétrécissement local le long du canal de bras (26).

4. Chaussure de fuite (10) selon la revendication 2 ou 3, dans laquelle les première et seconde parties de corps (30I, 30II) forment une glissière (34) adaptée pour être saisie par un tuyau de sortie de boue (80).

5. Chaussure de fuite (10) selon l'une quelconque des revendications 1 à 4, dans laquelle l'élément d'usure (40) comprend également un évidement fermé (42) pour former une partie de l'une des ouvertures communes (24).

6. Système de chaussure de fuite (1) pour une application de boue, dans lequel le système de chaussure de fuite (1) comprend
- au moins une chaussure de fuite (10) selon l'une quelconque des revendications précédentes 1 à 5 ;
- un bras de support (90) relié au moins à une chaussure de fuite (10) ; et
- un tuyau de sortie de boue (80) relié à l'au moins une chaussure de fuite (10).

7. Procédé (100) de remplacement d'un élément d'usure (40) d'une chaussure de fuite (10), le procédé (100) comprend les étapes suivantes
- la fourniture (200) un système de chaussure de fuite (1) selon la revendication 6 ou une chaussure de fuite selon l'une quelconque des revendications 1 à 5, et un second élément d'usure (40) ;
- la libération (300) de l'un, deux ou plusieurs dispositifs de retenue (60) ;
- le remplacement (400) de l'élément d'usure (40) par le second élément d'usure (40) ;
- la fixation (500) de l'un, deux ou plusieurs dispositifs de retenue (60).
